# EUROPEAN PATENT SPECIFICATION

(11) **EP 1 728 710 B1**
(45) Date of publication and mention of the grant of the patent: **16.07.2008**
(21) Application number: 06252407.9
(22) Date of filing: 05.05.2006
(51) Int. Cl.: B62D 53/08, B62D 53/10, B62D 53/12

(54) **Fifth wheel coupling**
Sattelkupplung
Sellette d'attelage

(30) Priority: 03.06.2005 GB 0511298
(43) Date of publication of application: 06.12.2006
(73) Proprietor: Fontaine International Europe Limited, Lowton, Warrington WA3 2AG (GB)
(72) Inventor: Fallon, Martin Francis, Wincham Cheshire CW9 6PY (GB)
(74) Representative: Barker, Rosemary Anne

(56) References cited:
- WO-A-96/27519
- US-A- 4 140 328
- US-A- 4 968 054
- US-B1- 6 352 277
- US-B1- 6 402 176

## Description

This invention concerns a fifth wheel coupling for mounting on a towing vehicle for co-operation with a king-pin mounted on a trailer.

One known form of fifth wheel coupling is disclosed in the applicant's own earlier GB2343433. Another known form of fifth wheel coupling is disclosed in GB2236729. In both of these cases the coupling comprises a plate having a slot for reception of the king-pin, a pivotally mounted jaw arranged adjacent the slot and movable between an open position and a closed position in which it can co-operate with the king-pin to retain it in the slot, and a locking member displaceable between a locking position, in which it serves to maintain the jaw in its closed position, and a release position in which it allows the jaw to open. The locking member is itself connected to a pivotally mounted linkage mechanism which includes a release arm. The release arm is in the form of an elongate bar which projects from one side of the plate and has a handle at its free end. The release arm is engageable with the plate in a first position in which the linkage mechanism holds the locking member in its release position and in a second position in which the linkage mechanism holds the locking member in its locking position. Such engagement is, in each case, by means of a detent or recess cut into an edge of the release arm bar which engages with a respective edge of a slot in the plate.

As the king-pin enters the slot it causes the jaw to pivot into its closed position. This releases the locking member so that it is urged into its locking position by spring means acting on the linkage mechanism. At the same time this brings the release arm into engagement with the plate in its second position.

Various proposals have been made for a secondary lock which will reliably retain the release arm in engagement with the plate in its second position whereby the locking member for the jaw is held in its locking position. If the release arm was to become free of such engagement, for example by a severe knock or jolt, and the spring means holding the locking member and linkage in their locking condition was also to fail, the king-pin could be freed with fatal results.

In the coupling shown in GB2236729 a secondary locking device is provided in the form of a spring snap hook which is manually engaged through aligned apertures in the release arm and the plate.

In the coupling disclosed in GB2343433 a plunger is slidably mounted on the release arm as a trigger for a pneumatic mechanism to assist withdrawal of the release arm to its release condition. This plunger also serves as a secondary lock by extending through the slot in the fifth wheel plate when the release arm is in its second, locking position thereby blocking disengagement of the release arm detent from the edge of the slot.

The preamble of independent claim 1 is based on the disclosure of any of the above mentioned GB documents.

The object of the invention is to provide an improved secondary lock arrangement for a fifth wheel coupling which does not require any manual intervention, and is simple and reliable.

With this object in view, the invention provides a fifth wheel coupling for mounting on a towing vehicle for co-operation with a king-pin mounted on a trailer, the coupling comprising a plate having a slot for reception for the king-pin, a pivotally mounted locking mechanism whereby the king-pin can be retained in the slot, said mechanism including a release arm which is engageable with the plate in a first position, wherein the mechanism is held in its release position, and in a second position, wherein the mechanism is held in its locking position, and a secondary locking device which serves to maintain the release arm in engagement with the plate in its second position, characterised in that the secondary locking device comprises a handle member which is mounted on the release arm in a manner permitting it to rotate on its own longitudinal axis and which is configured to include stop means and also to rotate under the influence of gravity to a position where the stop means abuts an edge of the plate or of a member mounted onto the plate.

In specific practical embodiments the handle member may have a weighted handle portion which causes it to rotate under the influence of gravity and this may simply be achieved by a cranked configuration.

The stop means may take the form of any assymetric projection from the handle member, a specific embodiment being a key strip long one side of the handle member.

The invention will be described further, by way of example, with reference to the accompanying drawings, in which:
Fig. 1 is a fragmentary underside perspective view of a preferred practical embodiment of the fifth wheel coupling of the invention with its release arm in a first position holding its locking mechanism in a release condition;
Fig. 2 is a similar view of the same coupling showing the release arm in a second position holding the locking mechanism in a locked condition;
Fig. 3 is an enlarged fragmentary schematic view, partly in section along line A-A of Fig. 1, showing the relative disposition of the release arm, handle and plate of the coupling; and
Fig. 4 is a similar view along line B-B of Fig. 2.

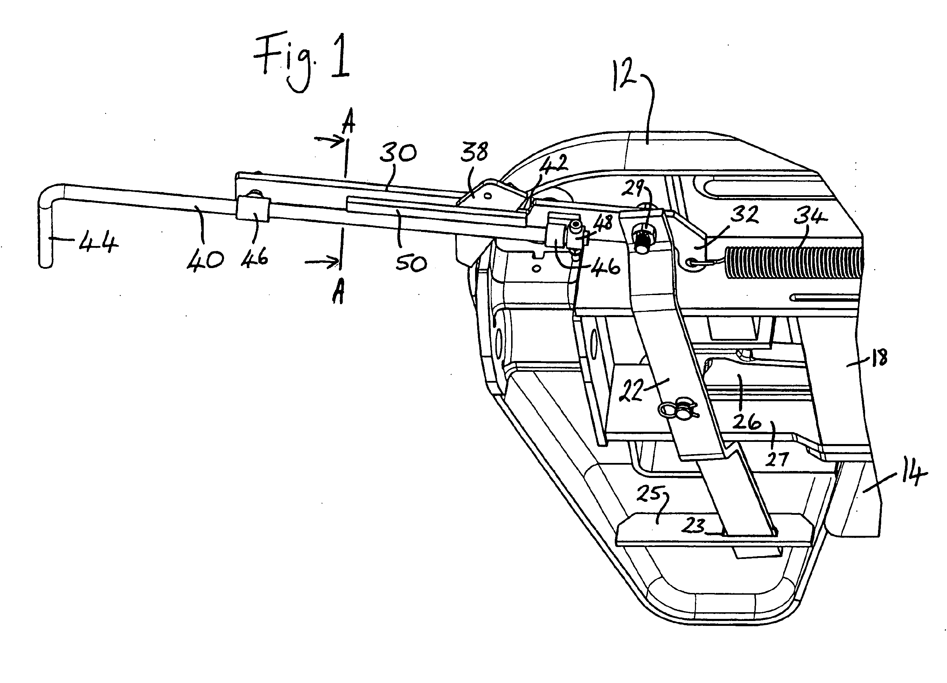

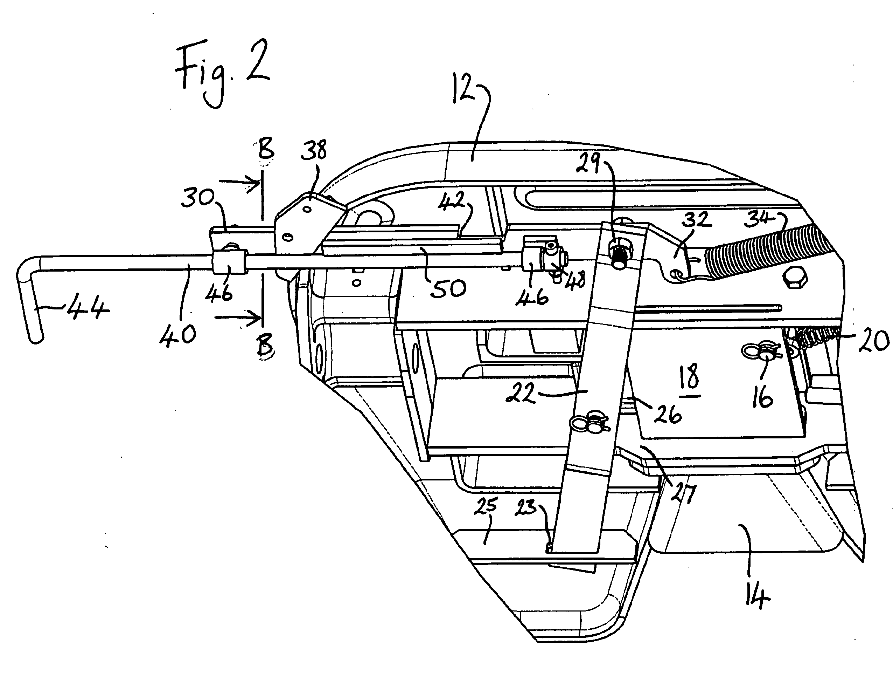

As shown in part in Figs. 1 and 2, this exemplary fifth wheel coupling comprises a plate 12 having a slot 14 for reception of a king-pin (not shown) of a trailer. A jaw (not shown), which is obscured behind an auxiliary cover plate 18 in Figs. 1 and 2, is pivotally mounted at 16 and is pivotable under bias of a tension spring 20 out of the path of the slot 14 to an open position allowing entry of the king-pin, but is positioned and configured so as to be pivoted against spring bias upon contact by the king-pin as it enters the slot 14 to close the slot behind the pin.

A pivotal locking mechanism comprises a link bar 22 loosely mounted at one end in a slot 23 in a ledge 25 fitted to the plate 12. A locking member 26 and a release arm 30 are connected to the link bar 22. The locking member 26 is pivotally connected to a middle region of the link bar 22, and is supported by a flange 27 fitted to the plate 12 so as to be displaceable across the slot 14 behind the jaw in its closed position (Fig. 2) or conversely moved back out of the slot, as shown in Fig. 1, to allow the jaw to pivot to its open position.

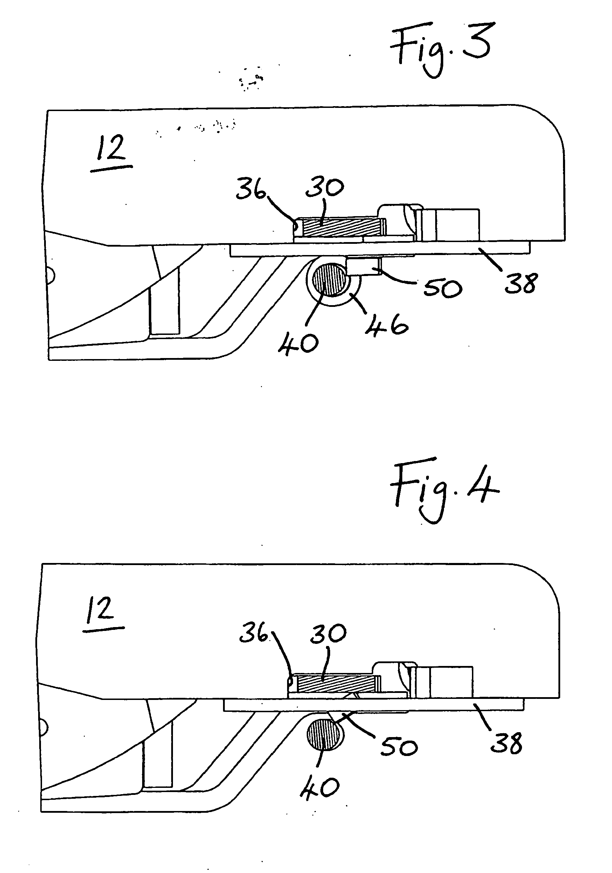

The release arm 30 is pivotally connected at 29 to the other end of the link bar 22 and it extends out beyond one side of the plate 12, by way of a slot or recess 36 (Figs. 3 and 4) in the edge of the plate 12 which is bounded by an overlying bracket plate 38. The release arm 30 has a cranked inner end portion 32 which is connected to a remote part of the plate 12 by a tension spring 34. This tension spring 34 biases the release arm 30 and the link bar 22 to the position shown in Fig. 2 where the locking member 26 extends across the slot 14. Consequently, the release arm 30 must be pulled outwardly from the plate 12, from the position shown in Fig. 2 to that shown in Fig. 1, to overcome the force of the tension spring 34 in order to move the locking member 26 to its release position to allow the jaw to open and release the king-pin.

The foregoing is conventional, is well known to those skilled in the technical field and is described and illustrated in greater detail in the applicant's earlier GB2343433, as well as in GB2236729. The precise details of this known arrangement are not critical; they are merely background to the secondary lock proposal of the present invention.

The release arm 30 is in the form of a relatively flat bar. It is provided with two detents or recesses which co-operate with opposite sides of the slot 36 in the plate 12 to hold the release arm 30 respectively in the locking mechanism open condition, as shown in Fig. 1 and the locking mechanism closed position, as shown in Fig. 2. The first detent 42 is formed in the upper edge of the release arm 30 as viewed in Figs. 1 and 2, while the second detent is formed in the lower edge, although it is not visible because its location is obscured by an overlying handle member 40.

With reference also to Figs. 3 and 4, it is apparent from all the drawings that the release arm 30 extends through the slot 36 behind the overlying bracket plate 38.

In order to provide a secondary lock, which will automatically keep the second detent in engagement with the edge of the slot 36 while the locking mechanism 22-34 is in its locking condition, so as to prevent any risk of inadvertent release of the king-pin, the aforesaid additional handle member 40 is provided. It is formed as a rod with a cranked outer handle portion 44 and it is mounted to the release arm 30 by way of a pair of bushes 46 which permit it to rotate on its own longitudinal axis. A stop 48 at the inner end of the handle rod 40 limits axial movement of the rod and prevents its disengagement from the release arm mounting bushes 46. The bushes 46 also serve to space the rod 40 apart from the surface of the release arm 30 so that the handle member (rod) 40 extends parallel to the release arm 30 but outside the slot 36, at the other side of the plate 38, as is evident in all the drawings.

An elongate key strip 50 is fixed to the handle rod 40, in a region between the two bush mounting locations. This must be done in a robust and secure manner, eg by welding. Its position on the circumference of the sectional profile of the handle rod 40 and its position longitudinally of the rod are chosen so that in the locked condition of the release arm 30 and locking mechanism as shown in Fig. 2 and Fig. 4, the weight of the handle portion 44 causes the rod 40 to rotate so that the key strip 50 projects upwards across the edge of the bracket plate 38. The key strip 50 thus serves as an effective stop to prevent withdrawal of the release arm 30 through the slot 36 to the Fig. 1 locking mechanism released condition.

When it is desired to move the release arm 30 to said released position, an operative grasping the handle member 40 at the handle portion 44 must make a positive effect to rotate this back to an angle where the key strip will again pass over the outer face of the bracket plate 38, as shown in Fig. 3. The release arm 30 can then be pulled outwards against the bias of the tension spring 34 until the first detent 42 once again engages the edge of the slot 36, ie the position shown in Fig. 1.

The foregoing is, of course illustrative and not limitative of the scope of the inventive and variations in detail will be readily apparent to those skilled in the relevant technical field, within the subject of the appended claims.

## Claims

1. A fifth wheel coupling for mounting on a towing vehicle for co-operation with a king-pin mounted on a trailer, the coupling comprising a plate (12) having a slot (14) for reception of the king-pin, a pivotally mounted locking mechanism (22, 26) whereby the king-pin can be retained in the slot, said mechanism including a release arm (30) which is engageable with the plate (12) in a first position, wherein the mechanism is held in its release position, and in a second position, wherein the mechanism is held in its locking position, and a secondary locking device which serves to maintain the release arm (30) in engagement with the plate (12) in its second position, **characterised in that** the secondary locking device comprises a handle member (40) which is mounted on the release arm (30) in a manner permitting it to rotate on its own longitudinal axis and which is configured to include stop means (50) and also to rotate under the influence of gravity to a position where the stop means (50) abuts an edge of the plate (12), or of a member (38) mounted onto the plate.

2. A coupling according to claim 1 wherein the handle member (40) has a weighted handle portion (44) which causes it to rotate under the influence of gravity.

3. A coupling according to claim 2 wherein the handle member (40) has a cranked handle portion (44).

4. A coupling according to any preceding claim wherein the stop means (50) is in the form of an asymmetric projection from the handle member (40).

5. A coupling according to claim 4 wherein the stop means (50) is in the form of a key strip.

## Patentansprüche

1. Sattelkupplungsanordnung zur Befestigung an einem Zugfahrzeug, um mit einem an einem Anhänger befestigten Zugsattelzapfen zusammenzuwirken, wobei die Kupplungsanordnung eine Platte (12) mit einem Schlitz (14) für die Aufnahme des Zugsattelzapfens und einen schwenkbar gelagerten Sperrmechanismus (22, 26) aufweist, mit welchem der Zugsattelzapfen in dem Schlitz zurückgehalten werden kann, wobei der Mechanismus einen Auslösearm (30), der mit der Platte (12) in einer ersten Position in Eingriff bringbar ist, worin der Mechanismus in seiner Auslöseposition gehalten ist, sowie in einer zweiten Position, worin der Mechanismus in seiner Sperrposition gehalten ist, und eine sekundäre Sperrvorrichtung umfasst, die dazu dient, den Auslösearm (30) in Eingriff mit der Platte (12) in seiner zweiten Position zu halten, **dadurch gekennzeichnet, dass** die sekundäre Sperrvorrichtung ein Griffelement (40) aufweist, das auf dem Auslösearm (30) in einer Weise befestigt ist, die ermöglicht, dass es sich um seine eigene Längsachse dreht, und die ausgestaltet ist, um Haltemittel (50) zu enthalten und auch um sich unter dem Einfluss der Schwerkraft in eine Position zu drehen, in der das Haltemittel (50) an eine Kante der Platte (12) oder eines auf der Platte befestigten Elements (38) stößt.

2. Kupplungsanordnung nach Anspruch 1, bei der das Griffelement (40) einen gewichteten Griffabschnitt (44) aufweist, der verursacht, dass es sich unter dem Einfluss der Schwerkraft dreht.

3. Kupplungsanordnung nach Anspruch 2, bei der das Griffelement (40) einen gekrümmten Griffabschnitt (44) hat.

4. Kupplungsanordnung nach einem der vorstehenden Ansprüche, bei der das Haltemittel (50) in der Form eines asymmetrischen Vorsprungs von dem Griffelement (40) vorliegt.

5. Kupplungsanordnung nach Anspruch 4, bei der das Haltemittel (50) in der Form einer Schlüsselleiste vorliegt.

## Revendications

1. Couplage de sellette d'attelage destiné à être monté sur un véhicule de remorquage afin de coopérer avec un pivot d'attelage monté sur une remorque, le couplage comprenant une plaque (12) présentant une fente (14) destinée à réceptionner le pivot d'attelage, un mécanisme de verrouillage monté de manière pivotante (22, 26), le pivot d'attelage pouvant être retenu dans la fente, ledit mécanisme comportant un bras de libération (30) qui peut être mis en prise avec la plaque (12) dans une première position, dans lequel le mécanisme est maintenu dans sa position de libération, et dans une seconde position, dans laquelle le mécanisme est maintenu dans sa position de verrouillage, et un dispositif de verrouillage secondaire qui sert à maintenir le bras de libération (30) en prise avec la plaque (12) dans sa seconde position, **caractérisé en ce que** le dispositif de verrouillage secondaire comprend un élément de poignée (40) qui est monté sur le bras de libération (30) d'une manière lui permettant de tourner sur son propre axe longitudinal qui est configuré pour comporter des moyens formant butée (50) et également pour tourner sous l'effet de la gravité vers une position dans laquelle les moyens formant butée (50) sont en butée contre un bord de la plaque (12), ou d'un élément (38) monté sur la plaque.

2. Couplage selon la revendication 1 dans lequel l'élément de poignée (40) présente une partie de poignée lestée (44) qui la fait tourner sous l'effet de la gravité.

3. Couplage selon la revendication 2 dans lequel l'élément de poignée (40) présente une partie de poignée coudée (44).

4. Couplage selon l'une quelconque des revendications précédentes dans lequel les moyens formant butée (50) se présentent sous la forme d'une protubérance asymétrique en saillie de l'élément de poignée (40).

5. Couplage selon la revendication 4 dans lequel les moyens formant butée (50) se présentent sous la forme d'une réglette de clés.
